Europäisches Patentamt

(19) European Patent Office

Office européen des brevets

(11) Numéro de publication: **0 217 707**
**B1**

## (12) FASCICULE DE BREVET EUROPEEN

(45) Date de publication du fascicule du brevet: **27.06.90**

(21) Numéro de dépôt: **86402018.5**

(22) Date de dépôt: **15.09.86**

(51) Int. Cl.⁵: **G 09 B 27/08, G 04 B 19/22**

(54) **Globes terrestres.**

(30) Priorité: **27.09.85 FR 8514386**

(43) Date de publication de la demande:
**08.04.87 Bulletin 87/15**

(45) Mention de la délivrance du brevet:
**27.06.90 Bulletin 90/26**

(84) Etats contractants désignés:
**CH DE FR GB IT LI**

(56) Documents cités:
**DE-A-1 622 963**
**FR-A- 836 450**
**FR-A-1 425 541**
**FR-A-1 437 285**
**FR-A-2 390 788**
**US-A-3 527 046**

(73) Titulaire: **Le Cren, Roger**
**5 Avenue de Joinville**
**F-94130 Nogent sur Marne (FR)**

(73) Titulaire: **Domen, Jean-Paul**
**75, rue du Moulin Vert**
**F-75014 Paris (FR)**

(72) Inventeur: **Domen, Jean-Paul**
**75, rue du Moulin Vert**
**F-75014 Paris (FR)**

Courier Press, Leamington Spa, England.

EP 0 217 707 B1

**Description**

L'invention concerne des perfectionnements aux globes terrestres utilisés comme moyens pédagogiques pour l'enseignement de la géographie et de l'astronomie et comme objets d'ameublement pour l'éclairage et la décoration.

Plus précisément, ces perfectionnements concernent un globe terrestre particulier, du genre comportant des moyens pour simuler l'état d'éclairement de la terre par le soleil et pour afficher l'heure solaire.

Un tel globe-horloge a été décrit dans de nombreux brevets. Parmi eux, on citera tout d'abord le brevet français No 1.425.541 qui expose par le détail les problèmes théoriques à résoudre mais décrit une solution entièrement mécanique complexe et de coût élevé. Une telle solution est également décrite dans la demande de brevet allemand publiée No 1.662.963. Le brevet français No 2.390.788 fiat appel à une mouvement d'horlogerie électrique associé à une mécanisme complexe et de coût élevé. En outre, ces trois brevets décrivent des globes-horloges équipés de mécanismes volumineux extérieurs au globe, ce qui en diminue considérablement l'intérêt.

Une solution électromécanique interne au globe et complète est décrite dans le bevet américain No 3.527.046. Dans ce brevet, les moyens pour simuler l'éclairement de la terre par le soleil et pour afficher l'heure solaire comprennent, à l'intérieur de la paroi translucide du globe: une source lumineuse, une coquille hémisphérique transparente portant des lignes de fuseaux horaires numérotées, entraînée en rotation par un arbre journalier disposé sivant l'axe des pôles, un écran hémisphérique monté pivotant sur des paliers solidaires de ladite coquille disposées dans le plan de l'équateur et un mouvement d'horlogerie électrique couplé audit arbre journalier et à l'entrée d'une réducteur de rapport 1/365.

Grâce à cette disposition, l'écran hémisphérique entraîné par la coquille transparente, tourne à raison d'une tour par jour solaire moyen autour de l'axe de l'arbre journalier, simulant ainsi les éclairements diurne et nocturne de la terre par le soleil, cependant que dans la partie nord de l'hémisphère terrestre éclairé, l'heure solaire est affichée en tous points. En outre, grâche au réducteur de rapport 1/365 qui entraîne un ergot engagé dans une rainure en arc de cercle pratiquée dans l'écran hémisphérique, cet écran oscille autour de son axe de pivotement de manière à recouvrir alternativement un cercle polaire puis l'autre selon le rythme des saisons.

Ce dernier globe-horloge présente cependant de nombreux inconvénients et notamment le caractère très approximatif de la simulation des mouvements journalier et annuel de la terre, le manque de rigueur et la complexité des cinématiques utilisées et, pour finir, l'absence totale de moyens pour le mettre au jour et à l'heure.

Une autre solution électromécanique complète, interne au globe, est suggérée à la fin de la description du brevet français No 1.437.285, à titre de variante aux formes de réalisation décrités. Selon la figure 3 de ce brevet, le globe est constitué par une coquille sphérique à paroi translucide, rigidement liée à un arbre creux monté tournant sur un arbre polaire. A l'intérieur de la coquille, sont disposés un écran hémisphérique et une lampe électrique. L'écran est rigidement lié en son milieu à l'extrémité d'une barre de soutien pivotante passant par le centre de la coquille. La lampe est disposée à l'autre extrémité de cette barre. Elle coopère a la fois avec l'écran pour créer sur la paroi de la coquille, deux zones sensiblement hémisphériques respectivement éclairée et obscure et avec un dispositif optique, pour projeter une image du soleil au centre de l'hémisphère éclairé. Un moteur électrique, associé à une boîte de démultiplication, fait tourner la coquille à raison d'un tour par jour et, selon la suggestion visée plus haut, le même moteur, associé à des moyens complémentaires non décrits, fait osciller, avec une période d'un an, la barre de soutien de l'écran, entre deux positions extrêmes écartées d'environ 47°, comme cela est dit en commentaire des autres figures.

De la sorte, est théoriquement réalisé un globe terrestre à éclairement solaire simulé, fonctionnant sand intervention extérieure. En pratique cependant, l'approche retenue consiste à réaliser une simulation du phénomène apparent observé par les hommes, à savoir, l'oscillation annuelle du soleil entre les deux tropiques. Une nouvelle approche s'impose donc qui, tout naturellement, consiste à simuler non plus l'apparence du phénomène mais au contraire, sa réalité astronomique longtemps ignorée, à savoir, la rotation annuelle de la terre autour du soleil.

Le premier objet de l'invention est de réaliser un globe terrestre à éclairement solaire simulé, aussi représentatif que possible de la réalité.

Un second objet de l'invention est de transformer un tel globe terrestre en une horloge solaire originale.

Un troisième objet de l'invention est de doter un tel globe-horloge de moyens de mise au jour et à l'heure, faciles à mettre en oeuvre.

Un quatrième objet de l'invention est de construire un globe terrestre à éclairement solaire simulè et affichage de l'heure solaire et du jour de l'année, en faisant appel à des cinématiques simples, rigoureuses et de faible coût.

Selon une première caractéristique de l'invention, un globe terrestre à élairement solaire simulè, constitué par une coquille sphérique à paroi translucide montée sur un support, ladite coquille comprenant à l'intérieur une source lumineuse et un écran à contour circulaire coopérant ensemble pour créer sur ladite paroi deux zones sensiblement hémisphériques respectivement éclairée et obscure, un arbre journalier disposé suivant l'axe des pôles du globe et ridigement lié à ladite coquille et des moyens horométriques électromécaniques liés audit écran et audit arbre journalier et adaptés à faire tourner lesdites zones hémisphériques autour du centre dudit globe, selon le rythme des jours et celui des années, est caractérisé en ce que lesdits moyens horométqiues comportent un corps et deux arbres de sortie constitués par lesdit arbre journalier et par un arbre annuel disposé suivant un diamètre dudit contour circulaire et ridigement lié audit écran, les axes desdits arbres se coupant sensiblement au centre de ladite coquille sphérique suivant un angle sensiblement égal à l'angle d'inclinaison du plan de l'équateur sur l'écliptique, ledit écran comportant une cavité centrale adaptée à laisser libre passage audit corps au cours de la rotation dudit écran autour de l'axe dudit arbre annuel.

Selon une seconde caractéristique de l'invention, un tel globe terrestre est en outre caractérisé en ce que lesdits moyens horométriques sont adaptés en régime nominal, d'une part, à faire tourner l'un par rapport à l'autre ledit écran et ladite coquille à raison d'un tour par jour sidéral et, d'autre part, à faire tourner ledit écran autour de l'axe dudit arbre annuel à raison d'un tour par année tropique.

Grâce à ces dispositions, l'hémisphère éclairé projeté sur la paroi d'un tel globe terrestre, d'une part, tourne autour de l'axe des pôles à la vitesse d'un tour par jour solaire moyen et, d'autre part, recouvre alternativement un cercle polaire puis l'autre, selon le rythme rigoureux des saisons.

En effet, sachant qu'une année tropique (temps qui sépare deux équinoxes de printemps) comprend sensiblement 366,25 jours sidéraux ou 365,25 jours solaires moyens, les rotations en sens inverse des arbres journalier et annuel du globe terrestre selon l'invention ont pour effet d'entraîner l'écran — et donc l'hémisphère éclairé — autour de l'axe des pôles dudit globe à la vitesse d'un tour par jour solaire moyen. En outre, le mouvement anneul de cet hémisphere éclairé se faisant à la vitesse d'une tour par année tropique autour d'une axe réellement représentatif de l'axe de rotation de la terre autour du soleil, l'état d'éclairement de la terre par le soleil est, avec un globe terrestre perfectionné selon l'invention, en permanence simulé en accord étroit avec la réalité.

Selon une troisième caractéristique de l'invention, le diamètre dudit contour circulaire étant légèrement inférieur au diamètre intérieur de ladite coquille, ledit écran comporte un élément principal et un élément complémentaire respectivement fixés aux deux extrémités dudit arbre annuel, lesdits éléments étant séparés l'une de l'autre par une couloir radial adapté à laisser libre passage audit arbre journalier pendant la rotation dudit écran autour de l'axe dudit arbre annuel.

Selon une caractéristique complémentaire de la précédente, des moyens opaques souples sont disposés dans ledit couloir pour empêcher le passsage de la lumière tout en autorisant celui dudit arbre journalier.

Grâce à ces dispositions, un contraste bien net est obtenu entre les hémisphères respectivement éclairé et obscur, projetés sur la paroi de la coquille sphérique.

Selon une autre caractéristique importante de l'invention, un tel globe terrestre comporte un dispositif pour afficher l'heure solaire et le jour de l'année, ledit dispositif comprenant des moyens de projection rigidement liés audit écran et disposés suivant l'axe de son contour circulaire, ladite source lumineuse étant rigidement fixée audit écran et disposée en porte-à-faux entre le corps desdits moyens horométriques et l'entrée desdits moyens de projection, un support transparent comportant le dessin d'une figurine représentative du soleil étant fixé à l'entrée desdits moyens de projection, une couronne comportant une suite d'inscriptions disposées en douze plages successives respectivement représentatives des douze mois de l'année et/ou des douze signes du zodiaque étant coaxialement disposée par rapport audit arbre annuel, rigidement liée au corps desdits moyens horométriques par des bras contournant ladite source lumineuse, et adaptée à traverser l'espace compris entre ladite source lumineuse et l'entrée desdits moyens de projection de façon que les inscriptions d'un segment de ladite couronne soient projetées sur la paroi de ladite coquille, au voisinage et de part et d'autre de la projection de ladite figurine.

Grâce à cette disposition, une figurine simulant le soleil apparaît au centre de l'hémisphère éclairé du globe terrestre perfectionné selon l'invention, sur le méridien où il est midi au soleil et à la latitude qui correspond à la déclinaison du soleil à cet instant. En outre, des inscriptions de mois et de jours apparaissant de part et d'autre de cette figurine, la position relative de cette figurine et de ces inscriptions indique le quantième du mois.

Grâce au globe terrestre à éclairement solaire simulé ainsi réalisé, le professeur de géographie dispose d'un moyen pédagogique efficace attrayant et le particulier, dans son appartement ou son bureau, d'une globe-horloge perfectionné et d'un moyen d'éclairage décoratif original. Quant au voyageur déambulant dans le hall d'une aérogare équipé d'un globe-horloge de grand diamètre réalisé selon l'invention, il disposera d'une horloge astronomique d'un nouveau genre qui lui permettra d'estimer l'heure solaire en toute région du monde qui l'intéresse et lui fournira l'état de l'éclairement solaire dans cette région.

Selon une autre caractéristique importante de l'invention, lesdits moyens horométriques comprennent un moteur électrique du type pas à pas, alimenté par un circuit de commande, ledit circuit étant adapté à produire des impulsions de commande soit à une fréquence de régime nominal, soit à une fréquence de régime rapide, la valeur de ladite fréquence de régime rapide pouvant être plusieurs milliers de fois celle de ladite fréquence de régime nominal.

Grâce à cette disposition, il est possible en moins d'une demi-heure de faire faire à l'écran un tour complet autour de l'axe de l'arbre annuel, simulant ainsi le déroulement des jours et des mois d'une année entière. De la sorte, la mise au jour et à l'heure du globe-horloge selon l'invention est une opération aisée à la portée du quiconque.

Selon une autre caractéristique de l'invention, lesdits moyens horométriques étant formés, d'une part, par un mouvement d'horlogerie constitué par un moteur pas à pas couplé à un réducteur entraînant un arbre intermédiaire, ledit moteur étant alimenté par un circuit de commande, et, d'autre part, par une boîte de démultiplication constituée par un premier et un second engrenage de rapports 1/N et 1/M respectivement, ledit arbre intermédiaire est relié auxdits arbres journalier et annuel par lesdits premier et second engrenages respectivement, ledit mouvement d'horlogerie est adapté à faire tourner ledit arbre intermédiaire à raison de N tours par jour solaire moyen sous l'action d'impulsions de commade de période P, la valeur du rapport 1/M est égale à 1/(366,25×N) et ledit circuit de commande est adapté à engendrer des impulsions de commande en régime nominal de période égale à P×(365,25/366,25)

Grâce à ces dispositions, dans un globe terrestre perfectionné selon l'invention, l'éclairement solaire simulé ainsi que l'affichage du jour et et l'heure sont réalisés dans des conditions rigoureuses, au moyen de cinématiques simples, d'un fonctionnement garanti et d'un faible coût.

Les caractéristiques et avantages de l'invention apparaîtront d'une manière précise à la suite de la description d'une forme particulière de réalisation faité ci-après, en référence au dessin annexé dans lequel:

la figure 1 représente une vue écorchée d'un globe terrestre perfectionné suivant l'invention;

la figure 2 représente un détail des inscriptions du calendrier;

les figures 3A et 3B représentent une vue de face et une vue latérale en couple du sous-ensemble électromécanique dudit globe;

la figure 4 représente le schéma de l'alimentation électrique du globe.

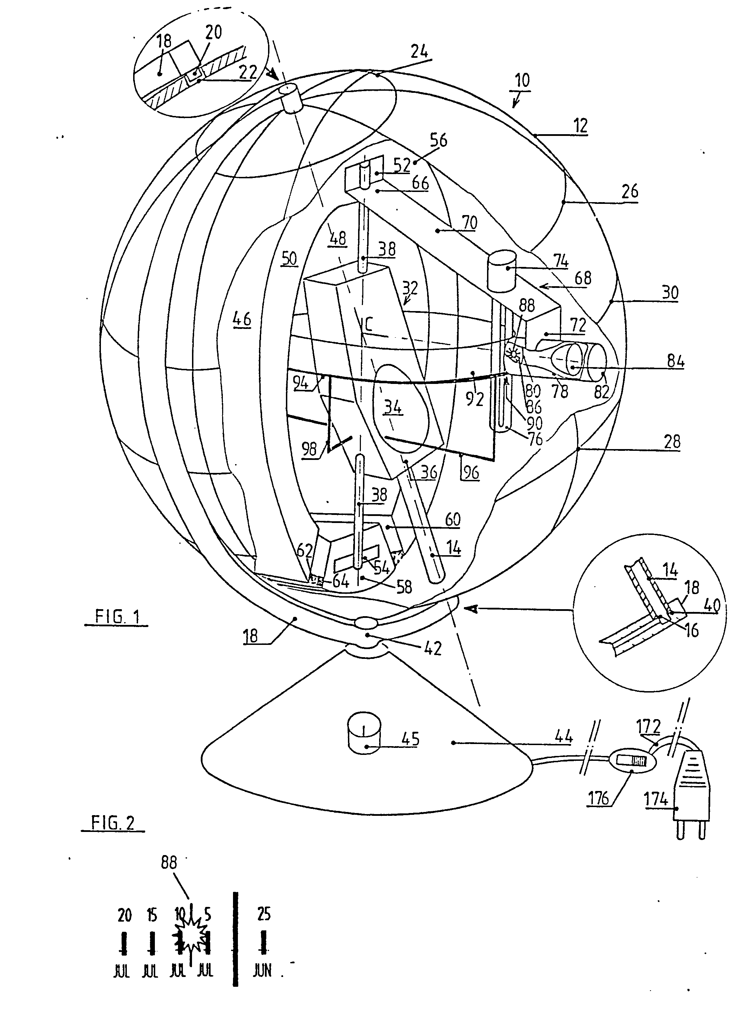

Selon la figure 1, un globe terrestre 10 est tout d'abord composé d'une coquille sphérique 12 à paroi translucide comportant tracé des continents et cercles caractéristiques. La coquille 12 est formée de deux demi-coquilles nord et sud respectivement, fixées l'une à l'autre par un ruban adhésif transparent portant un trait longitudinal relativement épais figurant le ligne de l'équateur et masquant le raccord entre les demi-coquilles. La coquille 12 est rigidement fixée en son pôle sud à un arbe polaire creux 14. L'extrémité inférieure de cet arbre 14 est montée pivotante avec frottement dans un logement 16 aménagé dans la branche sud d'un arceau de méridien 18 dont la branche nord est équipée d'un ergot 20 engagé dans un trou-palier 22 percé au pôle nord de la coquille 12. Sur la coquille 12 sont seulement représentés le cercle polaire nord 24, les tropiques 26 et 28 et l'équateur 30, les continents étant omis pour ne pas surcharger le dessin.

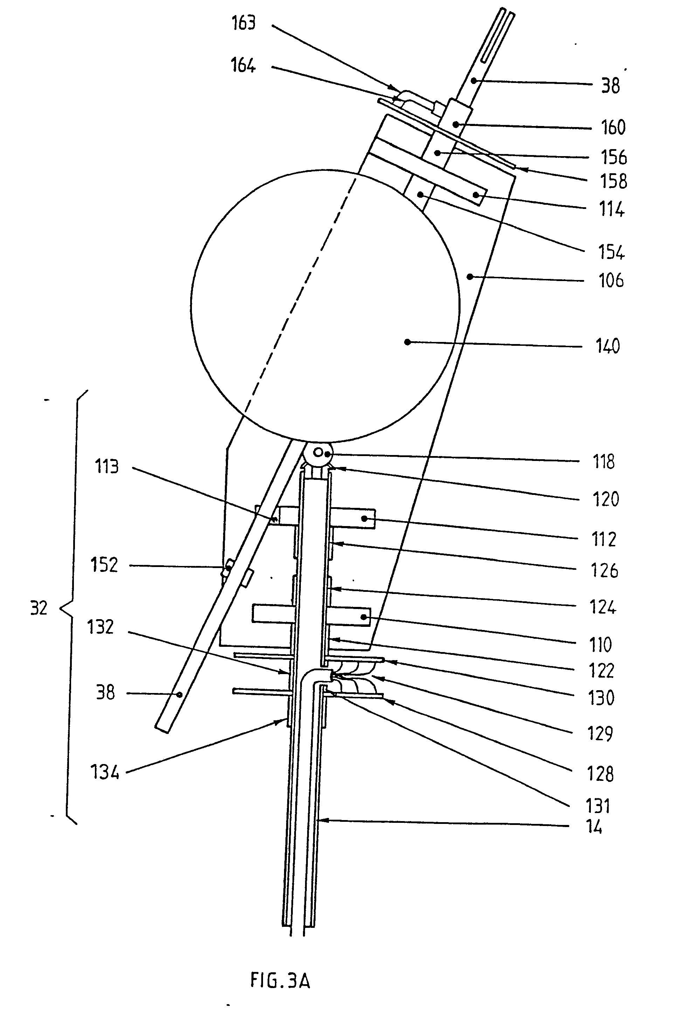

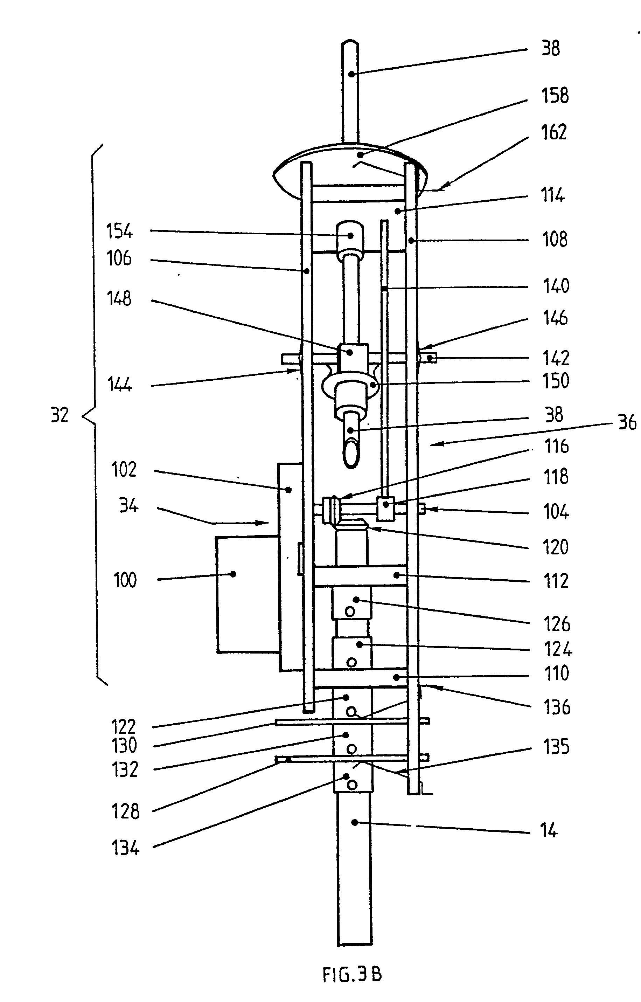

A l'intérieur de la coquille 12 est disposé un sous ensemble électromécanique 32 constitué par un mouvement d'horlogerie électrique 34 et une boîte de démultiplication 36. Cette boîte 36 comporte deux arbre de sortie, à savoir l'arbre polaire creux 14, appelé arbre journalier, et un arbre annuel creux 38. Les axes de ces deux arbres 14 et 38 sont concourants au centre C de la coquille sphérique 12 suivant un angle sensiblement égal à l'angle d'inclinaison du plan de l'equateur sur l'écliptique (soit 23 degrés 27 minutes). La boîte 36 comporte des engrenages (représentés en détail ci-après à la figure 3) qui établissent un rapport de démulitiplication de 1/366,25 entre les vitesses de rotation de l'arbre journalier 14 et de l'arbre annuel 38.

L'extrémité de l'arbre creux 14 est en appui sur un épaulement 40 du logement 16. L'arceau de méridien 18 comporte une embase creuse 42 rigidement fixée au socle 44 du globe 10. La branche sud de l'arceau 18, dans sa section comprise entre le logement 16 et l'embase 42, est également creuse de manière à établir un passage pour fils électriques depuis l'intérieur de la coquille 12 jusqu'au socle 44, à travers l'arbre journalier 14, le fond du logement 16, l'arceau 18 et l'embase 42.

A l'intérieur de la coquille 12 est également disposé un écran hémisphérique 46 dont le diamètre est légèrement inférieur au diamètre interne de la coquille 12. La face interne de l'écran 46 comporte en son centre une cavité hémisphérique 48 et sur sa périphérie une plage en couronne 50, la largeur de cette plage étant environ le tiers du rayon de l'écran. L'écran 46 est realisé en matériau opaque léger (polystyène expansé par exemple).

Aux extrémités de l'arbre annuel 38 sont soudées deux plaques de fixation 52 et 54. La plaque nord 52 est collée sur la plage périphérique de l'élément principal 56 de l'écran 46 et la plaque sud collée à l'élément complémentaire 58 de cet écran, l'arbre 38 étant disposé suivant l'axe de symétrie commun à ces deux éléments d'écran. Les deux éléments d'écran 56 et 58 sont séparés l'un de l'autre par un couloir radial 60 à parois de révolution autour de l'axe de l'arbre 38. Le couloir 60 est obturé dans sa partie sud par deux joints opaques souples 62 et 64, constitués par deux brosses en forme de demi-couronnes se faisant face et s'interpénétrant légèrement, fixées sur les parois de ce couloir. La face externe de l'écran 46y et les parois du couloir 60 sont peintes en noir mat, la face interne (couronne 50 et cavité 48) étant de couleur claire réfléchissante.

Sur la plaque de fixation 52 de l'élement principal 56 de l'écran 46 est rigidement fixé, par collage ou rivetage par exemple, le pied 66 d'une potence 68 dont le montant 70 fait un angle d'environ 45° avec l'arbre annuel 38, la traverse 72 de la potence 68 étant parallèle à cet arbre. Au milieu du montant 70 est rigidement fixée la douille 74 d'un tube fluorescent 75 en forme de U très allongé s'étendant en porte-à-faux le long d'une ligne parallèle à l'axe de l'arbre annuel 38. Au bout de la traverse 72 est rigidement fixé par le milieu un conduit optique 78 dont l'entrée 80 et la sortie 82 sont respectivement très proches du tube fluorescent 76 et de la paroi interne de la coquille 12, dont le diamètre interne est légèrement supérieur à la largeur totale du tube 76 et dont l'axe coïncide avec l'axe de l'écran hémisphérique 38. Dans la partie médiane du conduit 78 est fixée une lentille convexe 84 à fort grossisement. A l'entrée 80 du conduit 78 est fixé un disque en plastique transparent 86 au centre duquel est dessinée une figurine 88 représentant le soleil (cf. figure 2).

Entre le tube fluorescent 76 et le disque 86 est ménagé un passage étroit 90 occupé par un segment cylindrique appartenant à une couronne 92 coaxialement disposée par rapport à l'arbre annuel 38. La couronne 92 est montée sur un anneau 94 auquel sont soudés quatre bras en arceaux (tels que 96 et 98) adaptés à contourner l'extrémité libre du tube fluorescent 76 et rigidement liés à la boîte de démultiplication 36, de telle façon que le plan de symétrie longitudinale de cette couronne 92 passe par le centre C du globe 10. Le rayon de la couronne 92 est notablement inférieur à celui de la cavité hémisphérique 48.

La couronne 92 est réalisée en matériau plastique transparent semi-rigide. Elle porte des inscriptions et des marques de calendrier, à savoir douze plages successives respectivement représentatives des mois et des jours (avec 28, 25 jours pour février) et/ou des signes du zodiaque.

La figure 2 représente les inscriptions portées sur le segment de couronne placé à un moment donné dans le passage 90 et, en superposition, la figurine représentant le soleil dessinée sur le disque transparent 86.

Selon les figures 3A et 3B, le sous-ensemble électromécanique 32 comprend le mouvement d'horlogerie 34 et la boîte de démultiplication 36. Le mouvement 34 est constitué par un moteur pas à pas 100 faisant un tour pour 48 impulsions de commande, associé à un réducteur 102 de rapport 1/40, muni d'un arbre de sortie 104. Dans ces conditions, l'arbre 104 fait un tour par jour solaire moyen lorsque le moteur est alimenté par des impulsions dont la période est de 45 secondes. La boîte de démultiplication 36 comporte un corps formé de deux flasques 106 et 108 découpés dans une plaque en matériau plastique dur, rigidement liés ensemble par trois entretoise de forme parallélipipédique 110, 112 et 114 réalisées en matériau plastique semi-dur, auxquelles les deux flasques sont fixés par rivets.

A l'arbre de sortie 104 du réducteur 102 sont rigidement fixés un pignon conique de vingt dents 116 et une roue dentée de vingt-quatre dents 118. Le pignon 116 engrène avec un autre pignon conique de vingt dents 120 rigidement fixé à l'extrémité supérieure de l'arbre journalier 14. L'arbre journalier 14 est monté tournant dans des trous-paliers percés dans les entretoises 110 et 112. Des manchons 122, 124 et 126 fixés par rivet à l'arbre creux 14 assurent le maintien en place de l'arbre 14 tout en ménageant un léger jeu entre ces manchons et les entretoises de façon à autouriser la libre rotation relative de l'arbre 14 et de ces entretoises.

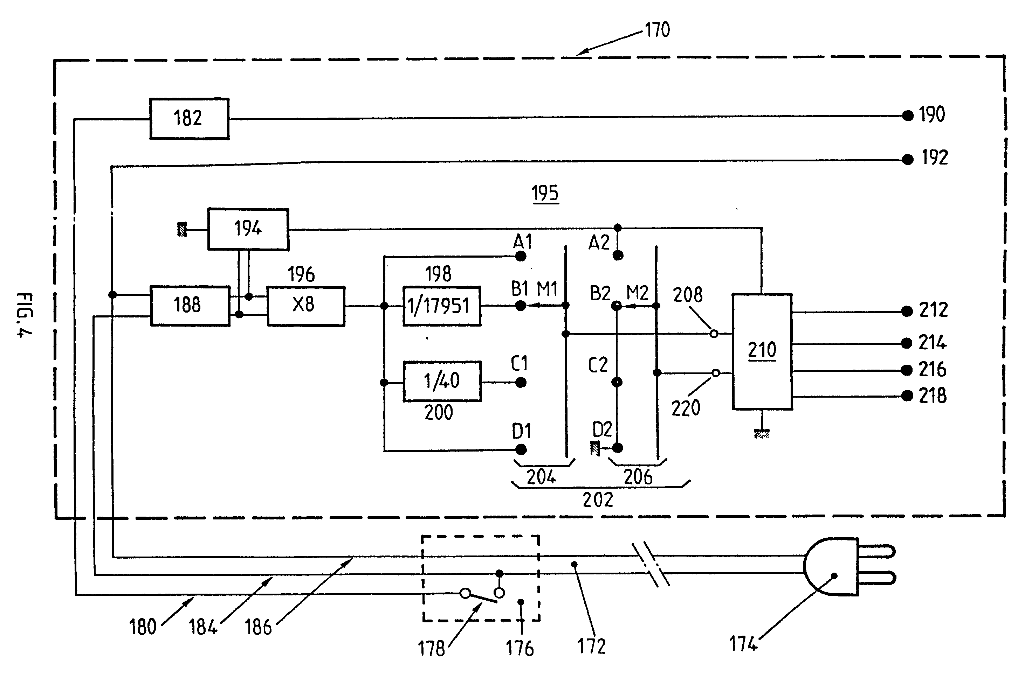

Sur l'arbre 14 sont disposées deux couronnes isolantes 128 et 130 portant chacune trois pistes conductrices circulaires non représentées, ces couronnes étant maintenues fixes par trois manchons 122, 132 et 134, ces deux derniers étant, comme le précédent, fixés par rivet à l'arbre creux 14. Les six pistes de ces deux couronnes 128 et 130 sont reliées par six conducteurs globalement référencés 129, aux six bornes de sortie de l'alimentation électrique du globe qui sera décrite ci-après en référence à la figure 4. Ces six conducteurs 129 sortent de l'arbre creux 14 par une ouverture 131.

Le flasque 108 diffère du flasque 106 notamment en ce qu'il comporte dans sa partie inférieure une extension en forme de L qui aménage dans le flasque 108 une découpe rectangulaire latérale dans laquelle sont engagées les couronnes 128 et 130. Sur chacun des bords supérieur et inférieur de cette découpe sont fixés par rivets trois curseurs tels que 136 et 138 qui viennent en contact avec les trois pistes conductrices imprimées sur les couronnes. Les trois curseurs en contact avec les pistes de la couronne 128 et le curseur central associé à la couronne 130 sont respectivement reliés aux quatre fils de commande de marche avant ou arrière du moteur pas à pas 100. Pour ne pas surcharger les dessins, ces fils ne sont pas représentés.

La roue dentée 118 engrène avec une roue dentée à 293 dents 140 rigidement liée à un arbre 142 monté tournant dans deux trous-paliers percés dans les flasques 106 et 108, cet arbre 142 étant maintenu en place par des rondelles élastiques déformables 144 et 146 enfoncées de force à ses extrémités. A l'arbre 142 est rigidement fixée par goupille une vis sans fin 148 qui engrène avec une roue 150 à trente dents ridigement fixée par rivet à l'arbre annuel creux 38. L'arbre annuel 38 est monté tournant dans deux trous-paliers respectivement percés dans l'entretoise 114 et dans une entretoise plus petite 152 disposée entre les entretoises 110 et 112 et fixée par rivets aux flasques 106 et 108. Une découpe 113 en forme de C est par ailleurs taillée dans l'entretoise 112 pour laisser libre passage à l'arbre 38.

Les entretoises 114 et 152 sont disposées entre les flasques 106 et 108 et les trous-paliers sont percés dans ces mêmes entretoises de telle façon que l'axe de l'arbre annuel 38 coupe celui de l'arbre journalier 14 suivant un angle sensiblement égal à 23 degrés 27 minutes. Par ailleurs, la hauteur de l'arbre 14 à l'intérieur de la coquille 12 est choisie de façon que le point où se coupent les axes des abres 14 et 38 soit le centre C de cette coquille.

L'arbre annuel 38 est maintenu en place dans ses trouspaliers par deux manchons 154 et 156 fixés par rivets, un léger jeu étant ménagé entre ces manchons et l'entretoise 114 de manière à autoriser une libre rotation de l'arbre 38.

En appui sur le manchon 156 est disposée une couronne isolante 158 à troise pistes conductrices, identique aux couronnes 128 et 130, un autre manchon 160, fixé par rivet à l'arbre 38, assurant le maintien fixe de la couronne 158 sur cet arbre.

Sur le bord supérieur du flasque 108 sont fixés par rivet deux curseurs tel 162 qui viennent en contact avec les deux pistes les plus écartées de la couronne 158. Ces deux curseurs sont reliés par deux fils électriques non représentés aux deux curseurs en contact avec les deux pistes les plus écartées de la couronne 130.

Les deux pistes les plus écartées de la couronne 158 sont reliées par deux fils électriques 163 et 164 aux bornes de la douille 74 du tube fluorescent 76. Ces deux fils passent à l'intérieur de l'arbre creux 38 et courent le long du montant 70 de la potence 68.

La figure 4 représente le schéma de l'alimentation 170 des dispositifs électriques du globe 10, installée dans le socle 44. Selon cette figure, un cordone 172 muni d'une prise 174 destinée à être branchée sur le secteur 220 V—50 Hz est relié à une bouton 176 de commande d'allumage du tube fluorescent 76. A cet effet, ce bouton 176 comporte un interrupteur 178 dont la sortie est reliée par un fil 180 à l'entrée du ballast 182 du tube 76 et l'entrée connectée à un des fils du cordon 172. Les deux fils du cordon 172 traversent sans coupure électrique le bouton 176 et sont reliés par deux fils 184 et 186 à l'entrée d'un transformateur abaisseur de tension 188.

La sortie du ballast 182 et le fil 186 sont connecté à deux bornes 190 et 192 auxquelles sont reliées les deux bornes de la douille 74 du tube fluorescent 76. Cette double liaison (non représentée) est réalisée à travers les deux contacts tournants les plus écartés de chacune des couronnes 156 et 130, deux fils de liaison traversant l'embase 42, la branche sud de l'arceau de méridien 18, le fond du logement 16 et l'arbre journalier 14, deux autres courant le long du flasque 108 et deux derniers traversant l'arbre annuel 38 de courant le long du montant 70 de la potence 68.

La sortie du transformateur 188 est reliée à l'entrée d'un générateur de tension continue 194 délivrant une dizaine de volts, utilisée (à travers des liaisons non représentées) pour l'alimentation des circuits électroniques 195 qui vont maintenant être décrits.

La sortie du transformateur 188 est également reliée à l'entrée d'un étage multiplicateur de fréquence 196 dont le facteur de multiplication est 8: à sa sortie apparaît donc un signal à 400 Hz présentant la haute stabilité à long terme du secteur à 50 Hz. Ce signal à 400 Hz est appliqué à l'entrée d'un premier étage diviseur de fréquence 198 dont le facteur de division est 17951: à sa sortie apparaît donc un signal dont la période est de 44,8775 secondes, laquelle est, avec une précision supérieure à $10^{-5}$, la période nominale $Pn=(45 \times 365,25/366,25)$ secondes des impulsions de commande du mouvement d'horlogerie 32.

Ce signal à 400 Hz est également appliqué à l'entrée d'un second étage diviseur de fréquence 200 font le facteur de division est 40: à sa sortie apparaît donc un signal dont la période est 0,1 seconde.

Ces trois signaux sont appliqués à un commutateur tournant 202 à quatre positions et deux galettes. La première galette 204 comporte quatre plots référencés $A_1$, $B_1$, $C_1$ et $D_1$ et un contact mobile $M_1$, et la seconde galette 206 quatre plots et un contact mobile identiques aux précédents, référencés $A_2$, $B_2$, $C_2$, $D_2$ et $M_2$. Les deux contacts mobiles $M_1$ et $M_2$ sont rigidement liés à un arbre solidaire d'un bouton de commande 45 monté sur le socle 44 du globe 10.

Les plots $A_1$ et $D_1$ sont connectés à la sortie de l'étage multiplicateur de fréquence 196, le plot $B_1$ à la sortie de l'étage diviseur de fréquence 198 et le plot $C_1$ à la sortie de l'étage diviseur de fréquence 200. Le contact mobile $M_1$ est relié à la borne 208 d'entrée d'horloge d'une circuit pilote de moteur pas à pas 210 (tel que le circuit intégré SAA 1042 construit par la sociéte américaine Motorola Semiconductor Products Inc.) comportant quatre bornes de sortie 212—214—216—218, respectivement reliées aux quatre fils d'alimentation des deux enroulements du moteur pas à pas 100. Cette liaison à quatre fils non représentée est réalisée à travers les trois contacts tournants de la couronne 128 et le contact tournant central de la couronne 130 et au moyen de quatre fils traversant l'embase 42, la branche sud de l'arceau de méridien 18, le fond du logement 16 et l'arbre journalier 14.

Le plot $A_2$ est connecté à la sortie de la source de tension continue 194 et les plots $B_2$, $C_2$ et $D_2$ mis à la masse. Le contact mobile $M_2$ est connecté à la borne d'entrée 220 du circuit pilote 210. Cette borne 220 est adaptée suivant qu'elle reçoit un signal 0 ou 1 (zéro et 10 volts dans le cas présent) à faire produire par ledit circuit pilote 210 des impulsions de commande de marche avant ou arrière pour le moteur pas à pas 100.

En référence aux figures 1 et 4, lorsque le commutateur 202 est en position B, des impulsions de commande de période nominale $Pn=44,8775$ secondes sont appliquées en marche avant aux fils de commande du moteur pas à pas 100.

Dans ces conditions, le moteur 100 entraîne l'arbre de sortie 104 du réducteur associé 102, à la vitesse d'un tour par jour sidéral, avec une précision supérieure à $10^{-5}$. Du fait que deux pignons coniques identiques 116 et 120, respectivement montés fixés sur l'arbre 104 et sur l'arbre journalier 14, engrènent ensemble le bloc formé par le mouvement d'horlogerie 34, la boîte de démultiplication 36, la couronne 92, l'écran 46, la potence 68, le tube fluorescent 76 et le conduit optique 78, tourne à la vitesse d'un tour par jour sidéral autour de l'arbre journalier 14 monté fixe dans la coquille sphérique 12. (On remarquera ici que, du fait des répartitions dans l'espace adoptées, d'une part, pour l'élément principal 56 de l'écran 46 et, d'autre part, pour la potence 68 équipée du tube 76 et du conduit 78, un bon équilibre statique des masses en mouvement est réalisé). Pendant cette rotation journalière chacune des extrémités de l'axe de l'arbre annuel 38 se déplace le long d'un cercle polaire et l'écran 46, solidaire de l'arbre annuel 38, effectue une fraction de tour (1/336,25) autour de l'axe de cet arbre annuel, dans le sens opposé à son mouvement journalier autour de l'arbre 14.

Grâce à la combinaison de ces deux mouvements en sens inverse, l'hémisphère du globe 10 délimité par le grand cercle entourant le contour extérieur de l'écran 46, qui est éclairé par le tube fluorescent 76 monté sur la face avant réfléchissante de l'écran 46, fait un tour en un jour solaire moyen (une année tropique égale 365,25 jours solaires moyens), simulant ainsi avec une bonne précision et un bon contraste à travers la paroi translucide de la coquille 12 du globe 10, l'état de jour de la partie de la terre éclairée par le soleil. Par ailleurs, grâce au faible espace existant entre le contour circulaire de l'écran 46 et la paroi interne de la coquille 12 ainsi qu'à la couleur noire mate de la face externe de l'écran 46, la lumière directe du tube 76 et celle réfléchie par la paroi éclairée de la coquille 12 sont arrêtées, de telle sorte qu'un hémisphère relativement obscur, franchement délimité par le grand cercle visé ci-dessus, est également créé sur le globe 10. En outre, grâce aux parois noires mates du couloir 60 et à la présence des joints-brosses 62 et 64 qui l'obturent, ces mêmes lumières ne peuvent pas traverser ce couloir et créer de tache lumineuse semi-circulaire sur la paroi obscure du globe. On obtient ainsi une bonne simulation de l'état de nuit de la partie de la terre non éclairee par le soleil.

La rotation de l'écran 46 autour de l'axe de l'arbre annuel 38 a pour conséquence d'amener l'arbre journalier 14 à se rapprocher de cet écran, à s'engager dans le couloir 60, à y avancer en déformant les joints-brosses 62 et 64, puis à en déboucher pour ensuite s'en écarter. De la sorte, l'angle formé par l'axe de l'arbre journalier 14 et le plan de la face avant de l'écran 46, évolue au rythme des saisons depuis une valeur nulle aux équinoxes de printemps et d'automne jusqu'à des valeurs extrêmes de ± 23 degrés 27 minutes, respectivement positive et négative aux solstices d'hiver et d'été de l'hémisphère nord du globe 10. Dans ces conditions, l'écran 46 recouvre alternativement un cercle polaire puis l'autre, au cours d'une période de rotation égale à une année tropique. De cette rotation annuelle, il résulte sur la paroi translucide du globe 10 une simulation de l'éclairement et donc de l'échauffement par le soleil des hémisphères nord et sud de la terre et notamment des régions polaires, au rythme des saisons.

Les rotations de l'écran 46 autour de l'arbre journalier 14 et de l'arbre annuel 38 entraînent le déplacement journalier et annuel du tube fluorescent 76 et du dispositif de projection constitué par le conduit optique 78 et la lentille 84. La figurine représentant le soleil (cf. fig. 2), dessinée sur le disque transparent 86 fixé à l'entrée du conduit optique 78, est de la sorte projetée sur la paroi du globe 10, au centre de l'hémisphère éclairé. Cette figurine représente à tout instant la position du soleil à son zénith. La longitude du centre de cette figurine est à tout instant celle du méridien terrestre où il est midi au soleil. Quant à sa latitude, elle est égale à la déclinaison du soleil et évolue au rythme des saisons depuis le ligne 26 du tropique du Cancer lors du solstice d'été de l'hémisphère nord, jusqu'à la ligne 28 du tropique du Capricorne lors du solstice d'hiver, en passant par la ligne 30 de l'équateur lors des équinoxes.

La présence d'un segment de couronne 92 entre le tube fluorescent 75 et l'entrée du conduit optique 78 a pour effet de projeter en les renversant sur la paroi du globe et de part et d'autre de la figurine représentant le soleil, les inscriptions portées sur cette couronne. Comme la couronne 92 est rigidement liée au sous-ensemble électromécanique 32 et coaxialement disposée par rapport à l'arbre annuel 38, l'écran 46, entraîné par cet arbre, ainsi que le tube 76 et le conduit 78 qui lui sont rigidement liés, tournent autour de la couronne 92 à la vitesse d'un tour par année tropique. Si les inscriptions de la couronne 92 ont été convenablement calées par rapport à une position de référence de l'écran 46 (une équinoxe par exemple), la position relative de la figurine du soleil et des inscriptions de calendrier projetées sur la paroi du globe indique constamment le jour du mois, dès lors que prelablement une mise à jour du globe-horloge aura été effectuée, comme cela est précisé ci-après.

Au moyen d'une tel globe-horloge perfectionné selon l'invention, le professeur de géographie qui en dispose peut aisément expliquer à ses élèves les effets d'éclairement et donc d'échauffement de la terre qui résultent de l'écoulement des jours et de l'alternance des saisons. A cet effet, il pourra faire tourner à la main la coquille 12 et tout son contenu, entre ses deux points de pivotement.

En installant un tel globe terrestre de dimensions convenable dans le hall d'une aérogare, un effet de décoration original est obtenu et une source de renseignements est constituée: le voyageur peut en effet simplement en regardant un globe terrestre ainsi transformé en horloge astronomique, immédiatement estimer l'heure solaire en chaque région du monde qui l'intéresse et, en outre, connaître l'état d'éclairement de cette région, à cet instant.

De plus, à titre d'objet d'ameublement, un tel globe terrestre à éclairement solaire simulé perfectionné selon l'invention, constitue un moyen d'éclairement et de décoration particulièrement original qui convient tout aussi bien aux appartements qu'aux bureaux ouverts au public (agences de voyage, par exemple). Dans un tel cas, grâce à l'interrupteur 178 commandant l'allumage du tube fluorescent 76, il est possible d'allumer et d'eteindre à volonté le globe terrestre 10, tout en permettant aux moyens horométriques de ce globe de continuer à fonctionner. Il en résulte qu'au moment de l'allumage de la source lumineuse d'une globe-horloge perfectionné selon l'invention, celui-ci comporte immédiatement un hemisphère éclairé simulant l'état instantané de l'éclairement de la terre par le soleil et, en outre, il indique le jour et l'heure.

En référence aux figures 3 et 4, lorsque les deux contacts mobiles M du commutateur 202 sont reliés aux deux plots B, des impulsions de commande en marche avant de période nominale Pn sont appliquées par le circuit pilote 210 aux deux enroulements du moteur pas à pas 100 et l'arbre de sortie 104 du mouvement d'horlogerie 34 avance d'un tour par jour sidéral. Comme il y a 366,25 jours sidéraux dans une année tropique, il faut diviser par 366,25 la vitesse de rotation de l'axe 104 pour obtenir celle que doit avoir l'arbre annuel 38. Ce rapport s'écrit encore: 293×5/4. La roue 118 à 24 dents qui engrène avec la roue 140 à 293 dents et la vis sans fin 148 solidaire de la roue 140 qui entraîne la roue 150 à 30 dents, coopèrent pour réaliser ce rapport: l'arbre annuel 38 fait un tour complet en une année tropique.

En plaçant les deux contacts mobiles M du commutateur 202 sur les plots D, des impulsions de commande en marche avant de période égale à 2,5 ms sont appliquées par le circuit pilote 210 aux deux enroulements du moteur pas à pas 100. Dans ces conditions, l'arbre de sortie 104 du mouvement d'horlogerie avance d'un tour toutes les 4,8 secondes et l'arbre annuel 38 fait un tour en 29,3 minutes. Grâce à cette rotation très rapide il est aisé, par la lecture du calendrier projeté sur la paroi de la coquille 12, de mettre au jour le globe-horloge 10. Pour réduire encore cette durée de mise à jour, il suffira de placer les contacts mobiles du commutateur 202 sur les plots A. Dans ce cas, le circuit pilote 210 délivre des impulsions de commande en marche arrière aux deux enroulements du moteur 100. Celui-ci tourne alors en marche arrière à la vitesse très rapide précédente, ce qui permet de diviser par deux la durée maximale de mise à jour du calendrier.

Dès que le globe-horloge 10 est mis au jour, les contacts mobiles du commutateur 202 seront placés sur les plots C. Dans ce cas, des impulsions de commande en marche avant de période égale à 0,1 seconde sont appliquées par le circuit pilote 210 aux deux enroulements du moteur 100 et l'arbre 104 fait alors un tour en un peu plus de trois minutes. La mise à l'heure solaire précise du globe-horloge 10 se fait ainsi sans difficulté. Il suffit ensuite de commuter les contacts mobiles M et de la placer sur les plots B pour que le moteur 100 reçoive des impulsions de commande en marche avant de période nominale et que le globe-horloge 10 indique à tout moment l'heure solaire, le mois et le quantième.

Grâce à ces rotations rapide et très rapide respectivement, le proffeseur de géographie qu disposé d'une globe terrestre perfectionné suivant l'invention, peut, pendant son heure de cours, aisément expliquer à ses élèves les mouvements de rotation de la terre sur elle-même et autour du soleil. De mème, la possibilité d'une rotation journalière ramenée à trois minutes donne une attrait supplémentaire aux globes terrestres perfectionnés suivant l'invention utilisés pour l'éclairage et la décoration des appartements et des bureaux.

La forme de réalisation de l'invention décrite ci-dessus à titre d'exemple non limitatif peut faire l'objet de nombreuses variantes.

Une variante consistera à utiliser une horloge à quartz au lieu de l'alimentation électrique décrite produisant des impulsions de fréquence dérivée de celle du secteur.

Une autre consistera à rigidement lier la boîte de démultiplication à un arbre coaxial de l'arbre journalier, ledit arbre coaxial étant monté fixe (ou pivotant avec frottement, de façon à permettre la rotation à la main de la coquille sphérique et de son contenu) dans le logement aménagé à l'extrémité sud de l'arceau de méridien, et à faire tourner l'arbre journalier autour de cet arbre coaxial et la coquille sphérique autour de l'écran. Un tel arbre coaxial sera creux pour laisser passage aux fils électriques d'alimentation du moteur et de la source lumineuse et les couronnes à contacts glissants montées sur l'larbre journalier devenant inutiles seront supprimées.

Une autre variante consistera à suspendre les globes terrestres au lieu de les monter sur un socle. Cette variante convient particulièrement bien aux globes terrestres de grande taille, utilisés pour la décoration des lieux publics, hall d'aérogare, musée technique ou centre commercial, par exemple.

Une autre variante consistera à faire tourner l'arbre de sortie du mouvement d'horlogerie à raison de N tours par jour sidéral au lieu d'un, les rapports de réduction des engrenages de la boîte de démultiplication étant modifiés en conséquence.

Une autre variant consistera à remplacer le second engrenage que entraîne l'arbre annuel par un second mouvement d'horlogerie alimenté par des impulsions de fréquence 366,25×N fois inférieure en moyenne à celle qui alimente le premier mouvement d'horlogerie solidaire de l'arbre journalier. Cette variante—qui convient aux globes de grande dimension—permet de tenir compte des irrégularités de rotation de la terre autour du soleil en modulant ladite fréquence en fonction desdites irrégularités.

**Revendications**

1. Globe terrestre à éclairement solaire simulé, du genre comprenant une coquille sphérique (12) à paroi translucide montée sur un support (18—44), ladite coquille comportant à l'intérieur:
—une source lumineuse (76) et un eçran (46) à contour circulaire, adaptés à coopérer ensemble pour créer sur ladite paroi, deux zones sensiblement hémisphériques respectivement éclairée et obscure,
—un arbre polaire (14), dit arbre journalier, rigidement lié à ladite coquille (12),
—une barre de soutien (38) rigidement liée à l'écran (46) passant par le centre de ladite coquille,
—un sous-ensemble électromécanique (32), relié audit arbre journalier (14) et à ladite barre de soutien (38),
—le tout étant agencé de façon à faire déplacer l'hémisphère éclairé de ladite coquille (12), en accord avec les cycles journalier et annuel de l'éclairement de la terre par le soleil, caractérisé en ce que

—ladite barre de soutien (38) dudit écran (46) est disposée suivant un diamètre du contour circulaire dudit écran,

—ladite barre (38) est un arbre, dit arbre annuel, entraîné en rotation par ledit sous-ensemble électromécanique (32),

—ledit sous-ensemble est agencé de manière que les axes desdits arbres journalier (14) et annuel (38) se coupent au centre de ladite coquille (12), suivant un angle sensiblement égal à l'inclinaison du plan de l'équateur sur celui de l'écliptique.

2. Globe terrestre selon la revendication 1, caractérisé en ce que ledit sous-ensemble électromécanique (32) est adapté, en régime nominal, à faire tourner l'un par rapport à l'autre ledit écran (46) et ladite coquille (12), à raison d'une tour par jour sidéral et, en même temps, à faire tourner cet écran autour de l'axe dudit arbre annuel (38), à raison d'un tour par année tropique.

3. Globe terrestre selon la revendication 1, caractérisé en ce que ledit écran (46) comporte un élément principal (56) et un élément complémentaire (58) respectivement fixés aux extrémités Nord et Sud dudit arbre annuel (38), lesdites éléments d'écran étant séparés l'une de l'autre par un couloir (60) adapté à laisser libre passage audit arbre journalier (14) au cours de la rotation dudit écran (46), ledit couloir étant, de préférence, équipé de moyens opaques souples (62—64) adaptés à empêcher le passage de la lumière tout en autorisant celui dudit arbre journalier.

4. Globe terrestre selon la revendication 1, équipé de moyens optiques (84—86) adaptés à projeter une image du soleil au centre de l'hémisphère éclairé de ladite coquille (12), caractérisé en ce qu'il comporte une couronne (92) pourvue d'inscriptions représentant suite des mois et des jours d'une année, ladite couronne étant, à la fois, coaxialement disposée par rapport audit arbre annuel (38), concentriquement placée par rapport à ladite coquille (12) et agencée de façon que la data du jour soit indiquée par la position de ladite image du soleil par rapport auxdites inscriptions.

5. Globe terrestre selon la revendication 4, caractérisé en ce que ladite couronne (92) est rigidement fixée par des bras (96—98) au corps dudit sous-ensemble électromécanique (32), ladite couronne étant disposée entre ladite source lumineuse (76) et lesdits moyens optiques (84—86), de telle façon que les inscriptions d'un segment de ladite couronne soient projetées sur la paroi de ladite coquille (12), de part et d'autre de ladite image du soleil

6. Globe terrestre selon la revendication 2, caractérisé en ce que ledit sous-ensemble électromécanique (32) comporte un moteur pas à pas (100) alimenté par un circuit de commande (195) et deux trains d'engrenages successifs aboutissant respectivement audit arbre journalier (14) et audit arbre annuel (38),

—le premier train d'engrenages (102—104—116—120) étant adapté à faire tourner l'un par rapport à l'autre ledit arbre journalier (14) et le corps dudit sous-ensemble électromécanique (32), à raison d'un tour par jour solaire moyen lorsque ledit moteur pas a pas (100) est alimenté par des impulsions de commande de période P,

—le second train d'engrenages (104—108—140—142—148—150) ayant un rapport de réduction de 366,25,

—ledit circuit de commande (195) étant, en régime nominal, adapté à engendrer des impulsions de commande de période sensiblement égale à P.(365,25/366,25).

7. Globe terrestre selon la revendication 6, caractérisé en ce que ledit second train d'engrenages comporte une roue menée pourvue de 293 dents.

8. Globe terrestre selon la revendication 1, caractérisé en ce que ledit arbre journalier (14) est monté sur ledit support (18) du globe de manière à ce que le corps dudit sous-ensemble (32) soit entraîné en rotation autour dudit arbre journalier, cependant que ladite coquille sphérique (12) est fixe et que ledit écran (46) à la fois tourne autour dudit arbre annuel (38) et suit en rotation ledit sous-ensemble autour dudit arbre journalier.

9. Globe terrestre selon la revendication 1, caractérisé en ce que le corps dudit sous-ensemble (32) étant rigidement lié à une broche polaire creuse, montée fixe sur ledit support (18) du globe, ledit sous-ensemble est adapté, d'une part, à faire tourner ledit arbre journalier (14) autour de ladite broche polaire et donc ladite coquille (12) autour dudit écran (46) et, d'autre part, à faire tourner ledit écran autour de l'axe dudit arbre annuel (38).

10. Globe terrestre selon la revendication 2, caractérisé en ce que ledit sous-ensemble électromécanique (32) comporte un moteur pas à pas (100) alimenté par un circuit de commande (195), ledit circuit étant adapté à produire des impulsions de commande, soit à une fréquence de régime nominal, soit à à au moins une fréquence de régime rapide, laquelle est au moins égale à plusieurs centaines de fois ladite fréquence de régime nominal.

**Patentansprüche**

1. Erdglobus mit simulierter Sonnenbeleuchtung, umfassend eine sphärische Schale (12) mit transluzider Wandung, montiert auf einem Support (18—44), welche Schale in ihrem Innern umfaßt:

—eine Lichtquelle (76) und einen Schirm (46) kruisförmiger Kontur, ausgebildet, um gemeinsam auf der Wandung zwei im wesentlichen halbsphärische beleuchtete bzw. abgedunkelte Zonen zu erzeugen,

—eine als Tageswelle bezeichnete polare Welle (14), die starr mit der Schale (12) verbunden ist,

—eine Haltestange (38), die mit dem Schirm (46) fest verbunden ist und das Zentrum der Schale durchsetzt,

—eine elektromechanische Unterbaugruppe (32), verbunden mit der Tageswelle (14) und der Haltestange (38),

—das ganze derart ausgebildet, um die beleuchtete Halbsphäre der Schale (12) im Gleichschritt mit den Tages- und Jahreszyklen der Beleuchtung der Erde durch die Sonne zu verlagern, dadurch gekennzeichnet, daß

—die Haltestange (38) des Schirms (46) längs eines Durchmessers der kreisförmigen Kontur des Schirms angeordnet ist,

—die Stange (38) eine als Jahreswelle bezeichnete, von der elektromechanischen Unterbaugruppe (32) zur Drehung angetriebene Welle ist,

—die Unterbaugruppe derart ausgebildet ist, daß die Achsen der Tageswelle (14) und der Jahreswelle (38) sich im Zentrum der Schale (12) unter einem Winkel schneiden, der im wesentlichen gleich der inklination der Äquatorebene bezüglich der ekliptikalen Ebene ist.

2. Erdglobus nach Anspruch 1, dadurch gekennzeichnet, daß die elektromechanische Unterbaugruppe (32) ausgebildet ist, um im Nominalbetrieb den Schirm (46) und die Schale (12) relativ zueinander zu drehen mit einem Umlauf pro siderischem Tag und um zugleich diesen Schirm um die Achse der Jahreswelle (38) mit einem Umlauf pro tropischem Jahr zu drehen.

3. Erdglobus nach Anspruch 1, dadurch gekennzeichnet, daß der Schirm (46) ein am Nordende der Jahreswelle (38) befestiges Hauptelement (56) und ein am Südende der Jahreswelle befestigtes Komplementärelement (58) umfaßt, welche Schirmelemente voneinander durch eine Passage (60) getrennt sind, die für den freien Durchlaß der Tageswelle (14) während des Umlaufs des Schirms (46) ausgebildet ist und die vorzugsweise mit weichen opaken Mitteln (62—64) versehen ist, ausgebildet zum Verhindern des Durchtritts von Licht unter Ermöglichung des Durchgangs der Tageswelle.

4. Erdglobus nach Anspruch 1, versehen mit optischen Mitteln (84—86), ausgebildet zum Projizieren eines Bildes der Sonne auf das Zentrum der beleuchteten Halbsphäre der Schale (12), dadurch gekennzeichnet, daß er einen Reif (92) umfaßt, versehen mit die Abfolge der Monate und Tage eines Jahres repräsentierenden Beschriftungen, welcher Reif gleichzeitig koaxial bezüglich der Jahreswelle (38) angeordnet ist, konzentrisch bezüglich der Schale (12) plaziert ist, und derart ausgebildet ist, daß das Tagesdatum durch die Position des Sonnenbildes relativ zu den Beschriftungen angezeigt wird.

5. Erdglobus nach Anspruch 4, dadurch gekennzeichnet, daß der Reif (92) mittels Armen (96—98) starr am Korpus der elektromechanischen Unterbaugruppe (32) befestigt und zwischen der Lichtquelle (76) und den optischen Mitteln (84—86) angeordnet ist derart, daß die Beschriftungen eines Segments des Reifs beidseits des Bildes der Sonne auf die Wandung der Schale (12) projiziert werden.

6. Erdglobus nach Anspruch 2, dadurch gekennzeichnet, daß die elektromechanische Unterbaugruppe (32) einen von einem Steuerschaltkreis (195) gespeisten Schrittmotor (100) und zwei aufeinanderfolgende Räderwerke umfaßt, endend an der Tageswelle (14) bzw. an der Jahreswelle (38),

—wobei das erste Räderwerk (102—104—116—120) ausgebildet ist, um die Tageswelle (14) und den Korpus der elektromechanischen Unterbaugruppe (32) relativ zueinander mit einer Umdrehung pro mittlerem Sonnentag umlaufen zu lassen, wenn der Schrittmotor mit Steuerimpulsion der Periode P gespeist wird,

— wobei das zweite Räderwerk (104—108—140—142—148—150) ein Reduktionsverhältnis von 366,25 aufweist,

—wobei der Steuerschaltkreis im Nominalbetrieb ausgebildet ist zum Erzeugen von Steuerimpulsen einer Periode, die im wesentlichen gleich P.(365,25/366,25) ist.

7. Erdglobus nach Anspruch 6, dadurch gekennzeichnet, daß das zweite Räderwerk ein mit 293 Zähnen versehenes angetriebenes Rad umfaßt.

8. Erdglobus nach Anspruch 1, dadurch gekennzeichnet, daß die Tageswelle (14) auf dem Support (18) des Globus derart montiert ist, daß der Korpus der Unterbaugruppe (32) zur Drehung um die Tageswelle angetrieben wird, während die sphärische Schale (12) stationär ist und der Schirm (46) gleichzeitig um die Jahreswelle (38) umläuft und der Drehung der Unter baugruppe um die Tageswelle folgt.

9. Erdglobus nach Anspruch 1, dadurch gekennzeichnet, daß der Korpus der Unterbaugruppe (32) fest mit einem polaren hohlen Dorn verbunden ist, fest moniert auf dem Support (18) des Globus, welche Unterbaugruppe ausgebildet ist, um einerseits die Tageswelle (14) um den polaren Dorn und damit die Schale (12) um den Schirm (46) umlaufen zu lassen und andererseits den Schirm um die Achse der Jahreswelle (38) umlaufen zu lassen.

10. Erdglobus nach Anspruch 2, dadurch gekennzeichnet, daß die elektromechanische Unterbaugruppe (32) einen von einem Steuerschaltkreis (195) gespeisten Schrittmotor (100) umfaßt, welcher Schaltkreis ausgebildet ist zum Erzeugen von Steuerimpulsen entweder mit einer Nominalbetriebsfrequenz oder mit mindestens eine Eilgang-Frequenz, die mindestens gleich dem mehrhudertfachen der Nominalbetriebesfrequenz ist.

**Claims**

1. A terrestrial globe with simulated sunlighting comprising a spherical shell (12) with a translucent wall mounted on a support (18—44), said shell including internally:

—a light source (76) and a circular contour screen (46) adapted to cooperate together for creating on said wall two substantially hemispherical zones respectively illuminated and dark;

—a polar shaft (14), called day shaft, rigidly connected to said shell (12);

—a holding bar (38) rigidly connected to said screen (46), crossing the center of said shell (12);

—an electromechanical sub-assembly (32) connected to said day shaft (14) and to said holding bar (38);

—the whole set being arranged in order to have the illuminated hemisphere of said shell (12) moved in accordance with the daily and yearly cycles of the earth sunlighting; characterized in that:

—said holding bar (38) of said screen (46) is disposed along a diameter of the screen circular contour;

—said bar (38) is a shaft, called year shaft, rotated by said electromechanical sub-assembly (32);

—said sub-assembly is so arranged that the axes of said day shaft (14) and of said year shaft (38) intersect substantially at the center of said shell (12) along an angle substantially equal to the inclination angle of the plane of the equator on the ecliptic.

2. A terrestrial globe according to claim 1, characterized in that said electromechanical sub-assembly (32) is adapted, under nominal operating conditions, to rotate said screen (46) and said shell (12) in relation to each other, at the rate of one revolution per sidereal day and, at the same time, to rotate said screen (46) around the axis of said year shaft (38) at the rate of one revolution per tropical year.

3. A terrestrial globe according to claim 1, characterized in that said screen (46) comprises a main element (56) and a complementary element (58) respectively fixed at the North and South end of said year shaft (38), said screen element being separated from each other by a corridor (60) adapted to give free passage to said day shaft (14) during the rotation of said screen (46) said corridor being preferentially fitted out with flexible opaque means (62—64) adapted to prevent the passage of light while allowing that of the day shaft.

4. A terrestrial globe according to claim 1, equipped with optical means (84—86) adapted to project a sun image at the center of the illuminated hemisphere of said shell (12), characterized in that it comprises a circular band (92) having inscriptions representative of the months and days of a year, said circular band being coaxially disposed in relation to said year shaft (38), concentrically set in relation to said spherical shell (12) and arranged in order that the day date be indicated by the position of said sun image in relation to said inscriptions.

5. A terrestial globe according to claim 4, characterized in that said circular band (92) is rigidly connected by arms (96—98) to the body of said electromechanical sub-assembly (32), said band being disposed between said light source (76) and said optical means (84—86) in such a manner that the inscriptions of a segment of said circular band be projected on the wall of said shell (12), on either side of said sun image.

6. A terrestrial globe according to claim 2, characterized in that:

—said electromechanical sub-assembly (32) comprises a stepping motor (100) supplied by a control circuit (195) and two gearing sets successively disposed and respectively ending to said day shaft (14) and to said year shaft (38);

—the first gearing set (102—116—120) being adapted to rotate in relation to each other said day shaft (14) and the body of said electromechanical sub-assembly (32) at the rate of one revolution per mean solar day when said stepping motor (100) is supplied by control pulses having a period P;

—the second gearing set (104—108—140—142—148—150) having a reduction ratio of 366,25;

—said control circuit (195) being under nominal operating conditions, adapted to generate control pulses having a period substantially equal to P.365,25/366,25.

7. A terrestrial globe according to claim 6, characterized in that said second gearing set comprises a driven wheel having 293 teeth.

8. A terrestrial globe according to claim 1, characterized in that said day shaft (14) is mounted on said support (18) of the globe in such a manner that the body of said sub-assembly (32) rotates around said day shaft (12) while said spherical shell (12) is fixed and said screen (46) both rotates around said year shaft (38) and follows said sub-assembly rotating around said day shaft.

9. A terrestrial globe according to claim 1, characterized in that the body of said sub-assembly (32) being rigidly connected to a polar hollow spit fixed on said globe support (18), said sub-assembly is adapted, on one hand, to rotate said day shaft (14) around said polar spit therefore said shell (12) around said screen (46) and, on the other hand, to rotate said screen around the axis of said year shaft (38).

10. A terrestrial globe according to claim 2, characterized in that said electromechanical sub-assembly (32) comprises a stepping motor (100) supplied by a control circuit (195), said circuit being adapted to generate control pulses either at the frequency of the nominal operating mode or at least at one frequency of a fast operating mode which is at least equal to several hundreds times said frequency of the nominal operating mode.

FIG. 1

FIG. 2

163

164

38

160

156

158

114

154

106

140

113

118

120

112

126

124

110

122

130

129

128

131

14

152

32

132

38

134

FIG.3A

2

FIG. 3 B

FIG.4

EP 0 217 707 B1